# EUROPEAN PATENT SPECIFICATION

(11) **EP 2 984 293 B1**
(45) Date of publication and mention of the grant of the patent: **30.08.2017**
(21) Application number: 14711181.9
(22) Date of filing: 06.03.2014
(51) Int. Cl.: F01D 9/04, F01D 11/08, F01D 25/12

(54) **IMPINGEMENT RING ELEMENT ATTACHMENT AND SEALING**
AUFPRALLRINGELEMENTBEFESTIGUNG UND -ABDICHTUNG
FIXATION ET ÉTANCHÉIFICATION D'ÉLÉMENT D'ANNEAU D'IMPACT

(30) Priority: 09.04.2013 EP 13162976
(43) Date of publication of application: 17.02.2016
(73) Proprietor: Siemens Aktiengesellschaft, 80333 München (DE)
(72) Inventor: HEADLAND, Paul, Lincoln LN1 1NA (GB)
(74) Representative: Maier, Daniel Oliver
(86) International application number: PCT/EP2014/054304
(87) International publication number: WO 2014/166676

(56) References cited:
- EP-A1- 2 299 063
- FR-A1- 2 913 718
- GB-A- 2 166 805
- US-A- 4 337 016

## Description

### Field of invention

The present invention relates to a turbine comprising at least two impingement ring elements which are coupled by a coupling ring element and to a method for manufacturing the turbine.

### Art Background

In turbines, in particular in turbine stages of turbines, turbine parts, such as inner walls or platforms, are exposed to hot working fluid of the turbine. Hence, cooling systems are used for cooling the turbine parts.

For cooling purposes, cooling air systems are installed for providing a cooling air stream to the hot turbine parts and/or preventing the hot stream of combustion gases to escape past the inner and outer walls of the main flow annulus. The space for installing a cooling air system and for providing an effective cooling circulation of the cooling fluid is limited. Furthermore, complex cooling systems are expensive and the reliability is low. Moreover, a high amount of cooling air my affect negatively the turbine performance.

In order to control the cooling fluid, the cooling channels which supply the cooling fluid are covered by an annular impingement ring. The annular impingement ring comprises a plurality of cooling holes through which the cooling fluid is exhausted from the cooling channel to a desired location within the gas turbine.

The impingement ring and the supporting structures to which the impingement ring is mounted comprise different thermal expansions with respect to the respective impingement ring such that air leakage due to gaps generated by the different thermal expansions is caused.

US 2005/0241314 A1 discloses a cooling structure for a gas turbine tailpipe. An impingement cooling plate whose cross-section is approximately L-shaped comprises a multiple number of holes and is mounted by welding to a rib of a vane shroud of the gas turbine.

GB 2 035 466 A1 discloses a turbine shroud support with an impingement baffle. An impingement baffle leg of the impingement baffle is mounted to a shroud of the gas turbine.

EP 1 500 789 A1 discloses an impingement cooled ring segment of a gas turbine, wherein an annular impingement ring element is mounted to a vane carrier.

EP 1 038 093 B1 discloses a turbine passive thermal valve for improved tip clearance control. A cooling channel is formed between a shroud of a gas turbine and an impingement ring element, wherein through the impingement ring element either the cooling fluid flows to the inner shroud or away from the inner shroud.

US 4,805,398 discloses a turbo-machine comprising annular impingement ring elements. The annular impingement ring elements overlap each other along a circumferential direction in order to provide a closed ring-shaped impingement ring element arrangement.

EP 2 299 063 A1 discloses an impingement baffle for a gas turbine engine. The impingement baffle is a one piece split impingement ring element with fastening elements at both free ends of the impingement ring element to enable the closing of the impingement ring element.

US 4 337 016 A discloses apparatus for confining cooling air to a flowpath between an outer case and adjacent structure. Various construction details which enable the means to sealingly engage the adjacent structure to block the leakage of cooling air and to accommodate changes in diameter are discussed. The sealing means is annular and has dual walls, a segmented ring and a segmented inner wall that is located radially inwardly of the segmented ring.

### Summary of the Invention

It may be an objective of the present invention to provide a turbine comprising an impingement cooling system with a reduced cooling air loss during thermal expansion of the gas turbine components.

This objective is solved by a turbine, in particular a gas turbine, and a method for manufacturing the turbine according to the independent claims.

According to a first aspect of the present invention, a turbine, in particular a gas turbine, is presented. The turbine comprises a support structure which extends along a circumferential direction of the turbine. The supporting structure comprises a groove to which cooling air is guidable. The groove extends along the circumferential direction.

The turbine furthermore comprises a first impingement ring element comprising a plurality of first holes and a second impingement ring element comprising a plurality of second cooling holes. The first impingement ring element and the second impingement ring element are mounted one after another along the circumferential direction to the groove such that the groove is covered by the first impingement ring element and the second impingement ring element.

The turbine further comprises a first coupling ring element which is arranged between the first impingement ring element and the second impingement ring element such that the groove is covered by the first coupling ring element between the first impingement ring element and the second impingement ring element. The first coupling ring element forms a sliding contact with the second impingement ring element such that a relative movement between the first coupling ring element and the second impingement ring element is providable.

The first coupling ring element comprises a second aperture such that the cooling air is flowable through the second aperture and some of the second cooling holes.

According to a further aspect of the present invention, a method for manufacturing a turbine, in particular a gas turbine, is presented. According to the method, a supporting structure is formed which extends along a circumferential direction of the turbine. The supporting structure comprises a groove through which cooling air is guidable. The groove extends along the circumferential direction. A first impingement ring element comprising a plurality of cooling holes and a second impingement ring element comprising a plurality of second cooling holes are formed. The first impingement ring element and the second impingement ring element are mounted one after another along the circumferential direction to the groove such that the groove is covered by the first impingement ring element and the second impingement ring element. A first coupling ring elements formed which extends between the first impingement ring element and the second impingement ring element along the circumferential direction such that the groove is covered by the first coupling ring between the first impingement ring element and the second impingement ring element. The first coupling ring element comprises a second aperture such that the cooling air is flowable through the second aperture and some of the second cooling holes. The sliding contact between the first coupling ring and the second impingement ring element is formed such that a relative movement between the first coupling ring element and the second impingement ring element is providable.

The turbine may be in particular a gas turbine, for example for power generation or for aircraft propulsion. The turbine comprises generally a rotary shaft which is rotatable around a rotary axis. The rotary axis defines an axial direction of the gas turbine. A direction crossing the rotary axis and being perpendicular to the rotary axis is denoted as the radial direction. A direction running around the rotary axis with a constant radius to the rotary axis may be denoted as the circumferential direction. A tangent of the circumferential direction is perpendicular to the radial direction and the axial direction.

The supporting structure denotes a structure of the gas turbine which is for example adapted for carrying blades, vanes or other housing parts of the turbine. For example, the supporting structure may comprise an inner vane carrier, an outer vane carrier, an inner shroud, an outer shroud, an inner housing and/or an outer housing.

The groove may be formed in a radial inner or outer surface of the supporting structure. Specifically, the groove may run along the circumferential direction and comprises a ring-shaped annular shape. The groove is coupled to a cooling fluid inlet for injecting cooling fluid into the groove and may be coupled to a cooling fluid outlet from which the cooling fluid may be bled off from the groove.

The first and second impingement ring elements may be formed from metal or a composite fibre, wherein the first and second impingement ring elements are thin and have a plate and sheet metal-like structure. The first and second impingement ring elements comprise respective first and second cooling holes through which the cooling fluid may flow between the groove and the location surrounding the respective impingement ring elements. The first and second impingement ring elements may have an I-shaped, L-shaped or U-shaped profile.

Specifically, the first impingement ring element and the second impingement ring element are structurally different elements. In other words, the first impingement ring element and the second impingement ring element cannot be seen as integral and monolithically unique structure bur have to be understood as separate spatially spaced and along the circumferential direction adjacent non-overlapping impingement ring elements.

The first impingement ring element and the second impingement ring element are mounted one after another along the circumferential direction to the groove. The first and second impingement ring elements may cover the groove along the circumferential direction and form together an annular ring-shaped profile. Alternatively, the first impingement ring element and the second impingement ring element may only cover a certain section of the groove along the circumferential direction and may thus form an half ring-shaped profile.

The first coupling ring element may be of the same material as the first impingement ring element and the second impingement ring element. For example, the first coupling ring element may be made of metal material or fibre composite material. The first coupling ring element is in slidable contact with at least one of the first impingement ring element and the second impingement ring element. Specifically, the first coupling ring element is fixed to the first impingement ring element and extends from the first impingement ring element along the circumferential direction to the second impingement ring element. The first coupling ring element overlaps with the second impingement ring element and may slide along the second impingement ring element in the circumferential direction. Hence, the first coupling ring element forms a floating and sliding contact with respect to the second impingement ring element.

In particular, the first coupling ring element comprises a radially inner and a radially outer surface. Accordingly, the second impingement ring element comprises a radially inner surface and a radially outer surface. The first coupling ring element contacts with its radially inner surface the radially outer surface of the second impingement ring element or contact with its radially outer surface the radially inner surface of the second impingement ring element. The first coupling ring element bridges a gap (clearance) between the first impingement ring element and the second impingement ring element.

Hence, by the present invention, an impingement ring system is provided which comprises at least two impingement ring elements, namely the first impingement ring element and the second impingement ring element. Hence, because the impingement ring element system is split into a number of ring elements, i.e. the at least first and second impingement ring elements, the thermal expansion of the impingement ring element is limited and reduced and allowing the first coupling ring element to slide over the adjacent surfaces of the respective first and second impingement ring elements.

According to conventional approaches, a monolithically formed single strip-like impingement ring is used which extends all around the circumferential direction and forms an annular and ring-shaped profile. Hence, at the overlapping joints and the respective ends, the single strip-like conventional impingement ring has a large thermal expansion which is complicated to handle. In contrast to this, by the present invention, the impingement ring system is divided into a plurality of impingement ring elements such that at the interfaces between the respective impingement ring elements only smaller thermal expansions occur which are easier to handle in contrast to one huge thermal expansion generating one large gap.

Hence, because the smaller gaps between the respective first and second impingement ring elements are easier to handle with regard to sealing requirements, the leakage of cooling air is reduced.

According to a further exemplary embodiment, the first coupling ring element is fixed to the first impingement ring element. The first coupling ring element may also be fixed to the first impingement ring element, by any one of the group comprising forming integrally, welding, fusing, riveting and bonding for example.

According to a further exemplary embodiment, the second impingement ring element comprises a guiding groove extending along the circumferential direction. The guiding groove is formed for engaging the first coupling ring element such that the first coupling ring element is slidable within the guiding groove. In particular, at the side faces of the second coupling ring, a U-shaped rail extending along the circumferential direction may be formed. The U-shaped rails engages the first coupling ring element. Hence, the first coupling ring element is guided during a sliding motion between the second ring element and the first coupling ring element. Furthermore, the guiding groove may be formed in such a way, that the first coupling ring element is slightly pressed against a respective surface of the second impingement ring element such that it is assured that the first coupling ring element keeps a respective sliding contact with the surface of the second impingement ring element, also during a sliding motion. Hence, a gap between the second impingement ring element and the first coupling ring element is prevented which could cause undesired turbulences and uneven distribution of the cooling fluid within the groove around the respective impingement ring element.

According to a further exemplary embodiment, the first coupling ring element comprises a first aperture (i.e. aperture region) such that the cooling air is flowable through the first aperture and at least some of the first cooling holes. The first aperture may have a size which covers a plurality of respective first cooling holes or the aperture region may comprise a hole pattern which complies with a hole pattern of the first cooling holes such that the cooling holes of the first aperture are aligned with the first cooling holes such that cooling air may flow through the first cooling holes and the holes of the first aperture. Hence, the first cooling ring element does not cover any or covers only some of the first cooling holes such that the cooling capacity is not negatively affected by attaching a first coupling ring element to the first impingement ring element.

Accordingly, the first coupling ring element comprises a second aperture such that the cooling air is flowable through the second aperture and some of the second cooling holes.

The second aperture may have a size which covers a plurality of respective first cooling holes or may comprise a hole pattern which complies with a hole pattern of the second cooling holes such that the cooling holes of the second aperture are aligned with the first cooling holes such that cooling air may flow through the second cooling holes and the holes of the second aperture. Hence, the first cooling ring element does not cover any or covers only some of the second cooling holes such that the cooling capacity is not negatively affected by attaching a first coupling ring element to the second impingement ring element.

In a first relative position of the first impingement ring element and the second impingement ring element, the first coupling ring element comprises an array of first apertures such that the cooling air is flowable through some of the first apertures and some of the first cooling holes and wherein the first coupling ring element comprises a second aperture such that the cooling air is flowable through the second aperture and some of the second cooling holes.
The first relative position can be at a relatively cold working condition of the turbine. The first relative position can be when a gap between the first impingement ring element and the second impingement ring element is at or near a minimum.

In a second relative position of the first impingement ring element and the second impingement ring element, the first coupling ring element comprises an array of first apertures such that cooling air is flowable through some of the first apertures and some of the first cooling holes, such that cooling air is flowable through some of the other first apertures only, and wherein the first coupling ring element comprises a second aperture such that cooling air is flowable through the second aperture and some of the second cooling holes. The second relative position can be at a relatively hot working condition of the turbine. The first relative position can be when a gap between the first impingement ring element and the second impingement ring element is at or near a maximum.

According to a further exemplary embodiment, the first impingement ring element is elastically deformable. The first impingement ring element and the groove are formed such that the first impingement ring element is inserted within the groove in a pre-stressed manner such that the first impingement ring element forms with the supporting structure a press fitting connection. The first impingement ring element may be made of a metal material in order to provide the elastically deformable properties. The first impingement ring element is in other words sprung into the groove in the supporting structure. This allows a simple assembly procedure and may provide a proper sealing on the contact surfaces between the first impingement ring element and the groove. Accordingly, the second impingement ring element may also be formed elastically deformable and may also be inserted within the groove in a pre-stressed manner in order to form a press-fitting connection.

According to a further exemplary embodiment, the first impingement ring element comprises a covering section which covers the groove and a retainer tab which protrudes from the covering section along an axial direction of the turbine. The support structure comprises a retainer tab hole such that the retainer tab is arranged inside the retainer tab hole in a slidable manner at least along the circumferential direction.

In an exemplary embodiment, the covering section denotes a section and a surface of the first impingement ring element which comprises a normal approximately in the radial direction. The first impingement ring element may comprise a side section which has a normal approximately in the axial direction. The covering section and the side section may form an L-shaped cross-section. Furthermore, the first impingement ring element may comprise a further side section with a normal approximately in axial direction, such that the first impingement ring element has a U-shaped cross-section.

The retainer tab may protrude from the covering section or from the side section approximately along the axial direction. The retainer tab recess is larger than the retainer recess such that if the retainer tab is inserted in the retainer tab recess, a loose-fit is generated such that the retainer tab floats inside the retainer tab recess specifically along the circumferential direction.

The first impingement ring element may comprise a plurality of retainer tabs and the groove may comprise respectively a plurality of retainer tab recesses. Furthermore, also the further used second and third impingement ring elements may comprise respective retainer tabs and the groove may comprise respective retainer tab recesses as described above for the first impingement ring element.

Hence, the slots, i.e. the retainer tab recesses, are wider and larger than the respective retainer tabs on the respective impingement ring elements such that a thermal movement of the supporting structure and the respective impingement ring element is allowed.

According to a further exemplary embodiment, the first impingement ring element comprises a first circumferential end face and (in circumferential direction opposed to the first circumferential end face) a further first circumferential end face. The second impingement ring element comprises a second circumferential end face and (in circumferential direction opposed to the second circumferential end face) a further second circumferential end face.

The first circumferential end face and the second circumferential end face are arranged adjacent to each other along the circumferential direction such that the first coupling ring element extends between the first circumferential end face and the second circumferential end face along the circumferential direction. In other words, the first circumferential end face and the second circumferential end face are arranged adjacent to each other and do not overlap each other.

According to a further exemplary embodiment, the turbine further comprises a second coupling ring element. The further first circumferential end face and the further second end face are arranged adjacent to each other along the circumferential direction such that the second coupling ring element extends between the further first circumferential end face and the further second circumferential end face along the circumferential direction. The second coupling ring element forms a sliding contact with the second impingement ring element.

Hence, by the exemplary embodiment above, it is outlined that at both circumferential end faces of a respective third impingement ring element respective coupling ring elements may be attached for being coupled to an adjacent impingement ring element. However, the respective coupling ring elements are fixed to one impingement ring element and are in slidable contact with an adjacent impingement ring element.

According to a further exemplary embodiment, the turbine comprises a third impingement ring element comprising a plurality of third cooling holes. The first impingement ring element, the second impingement ring element and the third impingement ring element are mounted one after another along the circumferential direction to the groove such that the groove is covered (completely or partially) by the first impingement ring element, the second impingement ring element and the third impingement ring element.

The turbine further comprises a third coupling ring element which extends between the first impingement ring element and the third impingement ring element along the circumferential direction such that the groove is covered by the third coupling ring element between the first impingement ring element and the third impingement ring element. The third coupling ring element forms a sliding contact with the first impingement ring element and/or the third impingement ring element.

Hence, by the exemplary embodiment described above, it is outlined that the turbine according to the present invention may comprise also three or a plurality of impingement ring elements which are coupled one after another along a circumferential direction and form an annular and ring-shaped impingement ring system. The impingement ring elements may slide with respect to each other along the circumferential direction such that thermal expansions between the impingement ring elements along each other and with respect to the supporting structure may be balanced.

It has to be noted that embodiments of the invention have been described with reference to different subject matters. In particular, some embodiments have been described with reference to apparatus type claims whereas other embodiments have been described with reference to method type claims.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a sectional view of a turbine according to an exemplary embodiment of the present invention;
Fig. 2A illustrates schematically a first and second impingement ring element coupled by a first coupling ring element, wherein the turbine is in a hot working condition according to an exemplary embodiment of the present invention;
Fig. 2B illustrates schematically a first and second impingement ring element coupled by a first coupling ring element, wherein the turbine is in a cold working condition according to an exemplary embodiment of the present invention;
Fig. 3 shows a sectional view of a turbine according to an exemplary embodiment of the present invention, wherein a retainer tab of an impingement ring element is shown;
Fig. 4 shows an impingement ring element comprising two coupling ring elements according to an exemplary embodiment of the present invention; and
Fig. 5 shows a schematical view of a turbine according to an exemplary embodiment of the present invention.

### Detailed Description

The illustrations in the drawings are schematical. It is noted that in different figures, similar or identical elements are provided with the same reference signs.

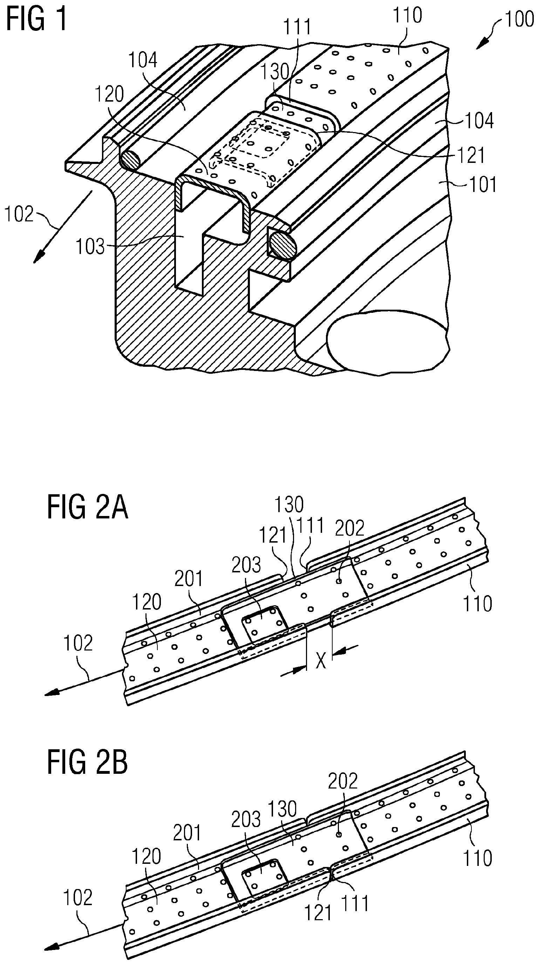

Fig. 1 shows a sectional view of a turbine 100, in particular a gas turbine, wherein the turbine 100 comprises a supporting structure 101, a first impingement ring element 110, a second impingement ring element 120 and a first coupling ring element 130.

The supporting structure 101 may be for example an inner shroud, an outer shroud, an inner housing or an outer housing of the turbine 100, for example. In Fig. 1, the supporting structure 101 is a vane carrier, for example.

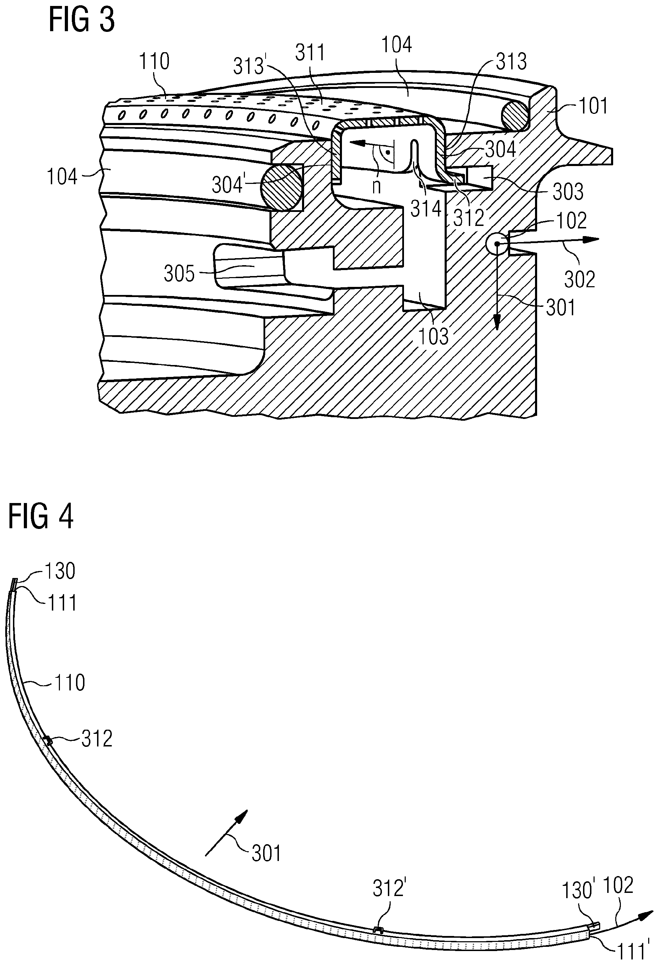

The supporting structure 101 extends along a circumferential direction 102. The turbine comprises a rotary shaft which is rotatable around a rotary axis. The rotary axis defines an axial direction 302 (see Fig. 3) of the gas turbine. A direction crossing the rotary axis 301 and being perpendicular to the rotary axis is denoted as the radial direction 301 (see Fig. 3). A direction running around the rotary axis with a constant radius to the rotary axis is denoted as the circumferential direction 102. A tangent of the circumferential direction 102 is perpendicular to the radial direction 301 and the axial direction 302.

The supporting structure 101 comprises a groove 103 through which cooling air is guidable, wherein the groove 103 extends along the circumferential direction 102. The groove is covered by a first impingement ring element 110 comprising a plurality of first cooling holes and a second impingement ring element 120 comprising a plurality of second cooling holes. The first impingement ring element 110 and the second impingement ring element 120 are mounted one after another along the circumferential direction 102 to the groove 103.

Between the first impingement ring element 110 and the second impingement ring element 120, a first coupling ring element 130 is arranged such that the groove 103 is covered by the first coupling ring element 130 between the first impingement ring element 110 and the second impingement ring element 120.

The first coupling ring element 130 forms a sliding contact with the second impingement ring element 120 such that a relative movement between the first coupling ring element 130 and the second impingement ring element 120 is providable.

Specifically, the first coupling ring element 130 is spatially fixed to the first impingement ring element 110 and is in floating/sliding contact with its free floating end located in an overlapping manner at the second impingement ring element 120.

If the supporting structure 101 extends due to increasing temperatures within the turbine 100, the first and second impingement ring elements 110, 120 may move with respect to each other along the circumferential direction 103 such that the thermal expansion can be balanced.

At least two structurally separated impingement ring elements 110, 120 are mounted within the groove 103 in order to cover the groove 103. An annular ring of the turbine 100 is split into at least two impingement ring elements 110, 120 such that the overall thermal expansion between one impingement ring element 110 and an adjacent second impingement ring element 120 is reduced in comparison to a one piece annular ring.

Furthermore, if the circumferential clearance along the circumferential direction 103 between a first circumferential end face 111 of the first impingement ring element 110 and a second circumferential end face 121 of the second impingement ring element 120 increases, the clearance is covered by the first coupling ring element 130. Hence, the different thermal expansions between the respective impingement ring elements 110, 120 and the supporting structure 101 do not cause gaps or clearances through which cooling air may bleed off from the groove 103 in an uncontrolled manner.

Furthermore, respective sealing rings 104 may be attached to the supporting structure 101 in order to improve the cooling efficiency of the cooling fluid.

Fig. 2A and Fig. 2B show the respective impingement ring elements 110, 120 and the first coupling ring element 130. Furthermore, Fig. 2A and Fig. 2B show a bottom view of the respective impingement ring elements 110, 120 and the first coupling ring element 130.

The first coupling ring element 130 may be integrally formed with the first impingement ring element 110 and/or may be for example welded to the first impingement ring element 110. Furthermore, the first coupling ring element 130 is in sliding contact with the second impingement ring element 120. In order to assure that the first coupling ring element 130 is in slidable contact with the respective surface of the second impingement ring element 120, the second impingement ring element 120 comprises a guiding groove 201 which engages the first coupling ring element 130. Hence, the guiding groove 201 may form a guiding rail for the edges of the first coupling ring element 130.

Furthermore, the first coupling ring element 130 may comprise first apertures 202. The first apertures 202 may comprise a through-hole-like pattern and may be aligned with the first through-holes of the first impingement ring element 110, such that the cooling fluid may flow through the first apertures 202 and the first through holes of the first impingement ring element 110.

Furthermore, the first coupling ring element 130 comprises a second aperture 203. The second aperture 203 may have a larger area, wherein the area of the second aperture 203 is chosen for "covering" a plurality of second holes of the second impingement ring element 120. It is meant that the second aperture 203 expand over an area such that a plurality of second holes of the second impingement ring element 120 remain unblocked. In the exemplary embodiment shown in Fig. 2A and Fig. 2B, the second aperture 203 expands over four second through-holes of the second impingement ring element 120. Hence, if the first coupling ring element 130 slides along a surface of the second impingement ring element 120, only a few or even no second through-holes of the second impingement ring element 120 are blocked by the material of the first coupling ring element 130 surrounding the second aperture 203.

Fig. 2A shows an alignment of the first impingement ring element 110 and the second impingement ring element 120, wherein the turbine 100 is in a hot working condition. Hence, the supporting structure 101, which is generally made of a metal material, comprises a larger thermal expansion than the thin plate-like formed impingement ring elements 110, 120. Hence, because the supporting structure 101 increases its size more than the respective impingement ring elements 110, 120, a gap (clearance) between the circumferential end faces 111, 121 of the respective impingement ring elements 110, 120 axes. The distance x of the respective circumferential end faces 111, 121 is covered by the first coupling ring element 130 such that an uncontrolled bled off of cooling air is prevented. In order to keep the bleed off of cooling air constant, the first coupling ring element 130 comprises respective through-holes also in the section where the first coupling ring element 130 overlaps the distance x.

Fig. 2B shows a cold working condition of the turbine 100, where the distance x is reduced, such that the circumferential end faces 111, 121 are located adjacent to each other and may abut each other along the circumferential direction 102.

Fig. 3 shows a further exemplary embodiment of the present invention, wherein a mounting of the first impingement ring element 110 within the groove 103 is shown. The first impingement ring element 110 is elastically deformable. Hence, the first impingement ring element 110 and the groove 103 are formed with respect to each other such that the first impingement ring element 110 is inserted within the groove 103 in a pre-stressed manner such that the first impingement ring element 110 forms with the supporting structure 101 a press-fitting connection.

For a better understanding, the radial direction 301 and the axial direction 302 of the turbine 100 is shown in Fig. 3.

The first impingement ring element 110 may comprise a covering section 301 which may comprise a normal n in radial direction 301. The first impingement ring element 110 may further comprise two side sections 313 which extend from the covering section 311 generally along the radial direction 301. The side sections 313 may have a normal n which is parallel to a normal of respective groove sidewalls 304. Hence, in order to mount the first impingement ring element 110 within the groove 103, the side sections 313 may be elastically bent together and after inserting the first impingement ring element 110 within the groove 103, the side sections 313 are released such that the side sections 313 press against the groove sidewalls 304 such that a press fitting connection between the supporting structure 101 and the first impingement ring element 110 is formed.

Additionally, as shown in Fig. 3, the first impingement ring element 110 comprises a retainer tab 312 which protrudes along the axial direction 302 of the turbine 100. The support structure 101 comprises a retainer tab hole 303, which is formed in the groove sidewall 304, such that the retainer tab 312 is arranged inside the retainer tab hole 303 in a slidable manner at least along the circumferential direction 102.

The retainer tab 312 may extend along the axial direction 302 from the covering section 311 or, as shown in Fig. 3, from the side section 313 of the first impingement ring element 110. If the retainer tab 312 is inserted in the retainer tab recess 303, a movement of the first impingement ring element 110 along e.g. the radial direction 301 may be prevented such that the first impingement ring element 101 is prevented from leaving the groove 103. However, because the retainer tab recess 303 is in circumferential direction 102 larger than the circumferential extension of the retainer tab 312, the retainer tab 312 may move along the circumferential direction 102 and may thus balance the thermal expansions of the first impingement ring element 110.

Furthermore, an air inlet 305 is shown, through which cooling air may be fed in or drained off from the groove 103. In particular, the cooling air is fed in or drained off along the axial direction 302.

In order to improve the flexibility of the first impingement ring element 110, a further aperture 314 may be formed within the side section 313.

Fig. 4 shows the first impingement ring element 110. In a preferred embodiment, the first impingement ring element 110 covers 1/3 of the circumference (i.e. the perimeter) of the groove 103. In other words, in order to cover the annular groove 103 along its full circumference and perimeter, three impingement ring elements 110, 120 are attached one after another along the circumferential 102 to the groove 103.

As shown in Fig. 4, the first impingement ring element 110 may comprise at each circumferential end faces 111, 111' respective first coupling ring elements 130, 130'. Furthermore, a plurality of respective retainer tabs 312, 312', e.g. two, are formed for being engaged by the respective retainer tab recesses 303 as shown in Fig. 3.

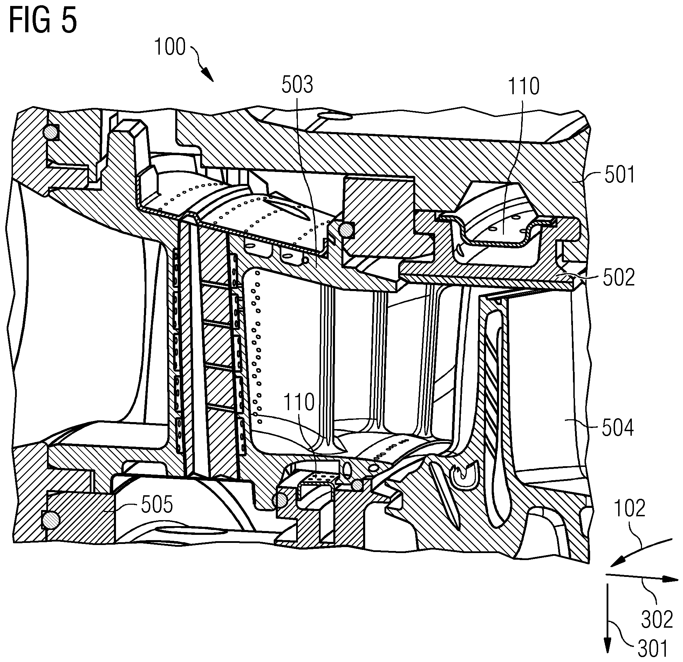

Fig. 5 shows an exemplary view of a turbine section of the turbine 100. As shown in Fig. 5, the turbine 100 comprises an outer housing 501 and an inner housing 502, wherein the first impingement ring element 110 may be arranged there between.

Furthermore, the guide vane 503 with the respective inner and outer shrouds is shown, wherein an inner guide vane carrier 505 carries the guide vanes 503. The first impingement ring element 111 may be arranged between the inner guide vane carrier and the guide vane structure 503. Furthermore, the turbine blade structure 504 is shown in Fig. 5.

Still further, the guide vane 503 comprises a radially inner platform and a radially outer platform which partly define the working gas flow passage. Each of the platforms has a trailing or downstream edge region between a trailing edge of an aerofoil of the guide vane to the downstream edge of the platform. As can be seen in Figure 5, the present impingement ring arrangement (110, 120), is located radially inwardly of the radially inner platform and in addition ensures a controlled leakage and supply of cooling air to the platform and particularly each platform of the annular array of guide vanes. Thus each of the platforms is supplied with equal amounts of cooling air to ensure the platforms are similarly cooled throughout the turbine's operating envelope.

It should also be noted that reference signs in the claims should not be construed as limiting the scope of the claims.

## Claims

1. Turbine (100), in particular a gas turbine, the turbine (100) comprising
a supporting structure (101) which extends along a circumferential direction (102) of the turbine (100), wherein the supporting structure (101) comprises a groove (103) through which cooling air is guidable, wherein the groove (103) extends along the circumferential direction (102),
a first impingement ring element (110) comprising a plurality of first cooling holes,
a second impingement ring element (120) comprising a plurality of second cooling holes, wherein the first impingement ring element (110) and the second impingement ring element (120) are mounted one after another along the circumferential direction (102) to the groove (103) such that the groove (103) is covered by the first impingement ring element (110) and the second impingement ring element (120), **characterized in that** the turbine further comprises
a first coupling ring element (130) which is arranged between the first impingement ring element (110) and the second impingement ring element (120) such that the groove (103) is covered by the first coupling ring element(130) between the first impingement ring element (110) and the second impingement ring element (120), and
wherein the first coupling ring element(130) forms a sliding contact with the second impingement ring element (120) such that a relative movement between the first coupling ring element(130) and the second impingement ring element (120) is providable,
wherein the first coupling ring element (130) comprises a second aperture (203) such that the cooling air is flowable through the second aperture (203) and some of the second cooling holes.

2. Turbine (100) according to claim 1, wherein the first coupling ring element(130) is fixed to first impingement ring element (110) by any one of the group comprising forming integrally, welding, fusing, riveting and bonding.

3. Turbine (100) according to claim 1 or 2,
wherein the second impingement ring element (120) comprises a guiding groove (201) extending along the circumferential direction (102),
wherein the guiding groove (201) is formed for engaging the first coupling ring element (130) such that the first coupling ring element(130) is slidable within the guiding groove (201).

4. Turbine (100) according to one of the claims 1 to 3, wherein the first coupling ring element (130) comprises a first aperture (202) such that the cooling air is flowable through the first aperture (202) and some of the first cooling holes.

5. Turbine (100) according to one of the claims 1 to 3,
wherein in a first relative position of the first impingement ring element (110) and the second impingement ring element (120),
the first coupling ring element (130) comprises an array of first apertures (202) such that the cooling air is flowable through some of the first apertures (202) and some of the first cooling holes and
wherein the first coupling ring element (130) comprises a second aperture (203) such that the cooling air is flowable through the second aperture (203) and some of the second cooling holes.

6. Turbine (100) according to one of the claims 1 to 3 and claim 5,
wherein in a second relative position of the first impingement ring element (110) and the second impingement ring element (120),
the first coupling ring element (130) comprises an array of first apertures (202)
such that cooling air is flowable through some of the first apertures (202) and some of the first cooling holes,
such that cooling air is flowable through some of the other first apertures (202) only, and
wherein the first coupling ring element (130) comprises a second aperture (203) such that cooling air is flowable through the second aperture (203) and some of the second cooling holes.

7. Turbine (100) according to one of the claims 1 to 6,
wherein the first impingement ring element (110) is elastically deformable, and
wherein the first impingement ring element (110) and the groove (103) are formed with respect to each other such that the first impingement ring element (110) is inserted within the groove (103) in a pre-stressed manner such that the first impingement ring element (110) forms with the supporting structure (101) a press fitting connection.

8. Turbine (100) according to one of the claims 1 to 7,
wherein the first impingement ring element (110) comprises a retainer tab (312) which protrudes along an axial direction (302) of the turbine (100), and
wherein the support structure comprises a retainer tab recess (303) such that the retainer tab (312) is arranged inside the retainer tab recess (303) in a slidable manner at least along the circumferential direction (102).

9. Turbine (100) according to one of the claims 1 to 8,
wherein the first impingement ring element (110) comprises a first circumferential end face (111) and a further first circumferential end face which is in circumferential direction (102) opposed to the first circumferential end face (111),
wherein the second impingement ring element (120) comprises a second circumferential end face (121) and a further second circumferential end face, which is in circumferential direction (102) opposed to the second circumferential end face (121), and
wherein the first circumferential end face (111) and the second circumferential end face (121) are arranged adjacent to each other along the circumferential direction (102) such that the first coupling ring element(130) extends between the first circumferential end face (111) and the second circumferential end face (121) along the circumferential direction (102).

10. Turbine (100) according to claim 9, further comprising
a second coupling ring element,
wherein the further first circumferential end face and the further second circumferential end face are arranged adjacent to each other along the circumferential direction (102) such that the second coupling ring element extends between the further first circumferential end face and the further second circumferential end face along the circumferential direction (102), and
wherein the second coupling ring element forms a sliding contact with the second impingement ring element (120).

11. Turbine (100) according to one of the claims 1 to 10, further comprising
a third impingement ring element comprising a plurality of third cooling holes,
wherein the first impingement ring element (110), the second impingement ring element (120) and the third impingement ring element are mounted one after another along the circumferential direction (102) to the groove (103) such that the groove (103) is covered by the first impingement ring element (110), the second impingement ring element (120) and the third impingement ring element, and
a third coupling ring element which extends between the first impingement ring element (110) and the third impingement ring element along the circumferential direction (102) such that the groove (103) is covered by the third coupling ring element between the first impingement ring element (110) and the third impingement ring element, and wherein the third coupling ring element forms a sliding contact with the first impingement ring element (110) and/or the third impingement ring element.

12. Turbine (100) according to one of the claims 1 to 11, wherein the supporting structure (101) is an inner vane carrier, an outer vane carrier, an inner shroud, an outer shroud, an inner housing and/or an outer housing.

13. Method for manufacturing a turbine (100), in particular a gas turbine (100), the method comprising
forming a supporting structure (101) which extends along a circumferential direction (102) of the turbine (100), wherein the supporting structure (101) comprises a groove (103) through which cooling air is guidable,
wherein the groove (103) extends along the circumferential direction (102),
forming a first impingement ring element (110) comprising a plurality of first cooling holes,
forming a second impingement ring element (120) comprising a plurality of second cooling holes,
mounting the first impingement ring element (110) and the second impingement ring element (120) one after another along the circumferential direction (102) to the groove (103) such that the groove (103) is covered by the first impingement ring element (110) and the second impingement ring element (120), **characterized in that** the method further comprises forming a first coupling ring element(130) which extends between the first impingement ring element (110) and the second impingement ring element (120) along the circumferential direction (102) such that the groove (103) is covered by the first coupling ring element(130) between the first impingement ring element (110) and the second impingement ring element (120),
wherein the first coupling ring element (130) comprises a second aperture (203) such that the cooling air is flowable through the second aperture (203) and some of the second cooling holes,
forming a sliding contact between the first coupling ring element(130) and the second impingement ring element (120) such that a relative movement between the first coupling ring element(130) and the second impingement ring element (120) is providable.

## Patentansprüche

1. Turbine (100), insbesondere Gasturbine, wobei die Turbine (100) umfasst:
eine Stützstruktur (101), welche sich entlang einer Umfangsrichtung (102) der Turbine (100) erstreckt, wobei die Stützstruktur (101) eine Rille (103) umfasst, durch welche Kühlluft geführt werden kann,
wobei sich die Rille (103) entlang der Umfangsrichtung (102) erstreckt,
ein erstes Prallringelement (110), das mehrere erste Kühllöcher umfasst,
ein zweites Prallringelement (120), das mehrere zweite Kühllöcher umfasst,
wobei das erste Prallringelement (110) und das zweite Prallringelement (120) hintereinander entlang der Umfangsrichtung (102) an der Rille (103) angebracht sind, derart, dass die Rille (103) von dem ersten Prallringelement (110) und dem zweiten Prallringelement (120) bedeckt wird, **dadurch gekennzeichnet, dass** die Turbine ferner umfasst:
ein erstes Kupplungsringelement (130), welches zwischen dem ersten Prallringelement (110) und dem zweiten Prallringelement (120) angeordnet ist, derart, dass die Rille (103) von dem ersten Kupplungsringelement (130) zwischen dem ersten Prallringelement (110) und dem zweiten Prallringelement (120) bedeckt wird, und
wobei das erste Kupplungsringelement (130) einen Gleitkontakt mit dem zweiten Prallringelement (120) bildet, derart, dass eine relative Bewegung zwischen dem ersten Kupplungsringelement (130) und dem zweiten Prallringelement (120) vorsehbar ist,
wobei das erste Kupplungsringelement (130) eine zweite Öffnung (203) umfasst, derart, dass die Kühlluft durch die zweite Öffnung (203) und einige der zweiten Kühllöcher hindurch geleitet werden kann.

2. Turbine (100) nach Anspruch 1,
wobei das erste Kupplungsringelement (130) an dem ersten Prallringelement (110) durch irgendeines aus der Gruppe befestigt ist, welche Anformen, Schweißen, Verschmelzen, Nieten und stoffschlüssiges Verbinden umfasst.

3. Turbine (100) nach Anspruch 1 oder 2,
wobei das zweite Prallringelement (120) eine Führungsrille (201) umfasst, die sich entlang der Umfangsrichtung (102) erstreckt,
wobei die Führungsrille (201) zum Angreifen an dem ersten Kupplungsringelement (130) ausgebildet ist, derart, dass das erste Kupplungsringelement (130) innerhalb der Führungsrille (201) gleiten kann.

4. Turbine (100) nach einem der Ansprüche 1 bis 3, wobei das erste Kupplungsringelement (130) eine erste Öffnung (202) umfasst, derart, dass die Kühlluft durch die erste Öffnung (202) und einige der ersten Kühllöcher hindurch geleitet werden kann.

5. Turbine (100) nach einem der Ansprüche 1 bis 3,
wobei in einer ersten relativen Position des ersten Prallringelements (110) und des zweiten Prallringelements (120)
das erste Kupplungsringelement (130) eine Anordnung von ersten Öffnungen (202) umfasst, derart, dass die Kühlluft durch einige der ersten Öffnungen (202) und einige der ersten Kühllöcher hindurch geleitet werden kann, und
wobei das erste Kupplungsringelement (130) eine zweite Öffnung (203) umfasst, derart, dass die Kühlluft durch die zweite Öffnung (203) und einige der zweiten Kühllöcher hindurch geleitet werden kann.

6. Turbine (100) nach einem der Ansprüche 1 bis 3 und Anspruch 5,
wobei in einer zweiten relativen Position des ersten Prallringelements (110) und des zweiten Prallringelements (120)
das erste Kupplungsringelement (130) eine Anordnung von ersten Öffnungen (202) umfasst,
derart, dass Kühlluft durch einige der ersten Öffnungen (202) und einige der ersten Kühllöcher hindurch geleitet werden kann,
derart, dass Kühlluft nur durch einige der anderen ersten Öffnungen (202) geleitet werden kann, und
wobei das erste Kupplungsringelement (130) eine zweite Öffnung (203) umfasst, derart, dass Kühlluft durch die zweite Öffnung (203) und einige der zweiten Kühllöcher hindurch geleitet werden kann.

7. Turbine (100) nach einem der Ansprüche 1 bis 6, wobei das erste Prallringelement (110) elastisch verformbar ist, und wobei das erste Prallringelement (110) und die Rille (103) in Bezug zueinander so geformt sind, dass das erste Prallringelement (110) in die Rille (103) auf eine vorgespannte Weise eingefügt wird, derart, dass das erste Prallringelement (110) mit der Stützstruktur (101) eine Presspassungsverbindung bildet.

8. Turbine (100) nach einem der Ansprüche 1 bis 7, wobei das erste Prallringelement (110) eine Haltelasche (312) umfasst, welche entlang einer axialen Richtung (302) der Turbine (100) vorsteht, und
wobei die Stützstruktur eine Haltelaschenaussparung (303) umfasst, derart, dass die Haltelasche (312) auf eine wenigstens entlang der Umfangsrichtung (102) gleitfähige Weise innerhalb der Haltelaschenaussparung (303) angeordnet ist.

9. Turbine (100) nach einem der Ansprüche 1 bis 8, wobei das erste Prallringelement (110) eine erste Umfangsstirnfläche (111) und eine weitere erste Umfangsstirnfläche, welche in Umfangsrichtung (102) der ersten Umfangsstirnfläche (111) gegenüberliegt, umfasst,
wobei das zweite Prallringelement (120) eine zweite Umfangsstirnfläche (121) und eine weitere zweite Umfangsstirnfläche, welche in Umfangsrichtung (102) der zweiten Umfangsstirnfläche (121) gegenüberliegt, umfasst, und wobei die erste Umfangsstirnfläche (111) und die zweite Umfangsstirnfläche (121) entlang der Umfangsrichtung (102) einander benachbart angeordnet sind, derart, dass sich das erste Kupplungsringelement (130) zwischen der ersten Umfangsstirnfläche (111) und der zweiten Umfangsstirnfläche (121) entlang der Umfangsrichtung (102) erstreckt.

10. Turbine (100) nach Anspruch 9, welche ferner umfasst:
ein zweites Kupplungsringelement,
wobei die weitere erste Umfangsstirnfläche und die weitere zweite Umfangsstirnfläche entlang der Umfangsrichtung (102) einander benachbart angeordnet sind, derart, dass sich das zweite Kupplungsringelement zwischen der weiteren ersten Umfangsstirnfläche und der weiteren zweiten Umfangsstirnfläche entlang der Umfangsrichtung (102) erstreckt, und
wobei das zweite Kupplungsringelement einen Gleitkontakt mit dem zweiten Prallringelement (120) bildet.

11. Turbine (100) nach einem der Ansprüche 1 bis 10, welche ferner umfasst:
ein drittes Prallringelement, das mehrere dritte Kühllöcher umfasst,
wobei das erste Prallringelement (110), das zweite Prallringelement (120) und das dritte Prallringelement hintereinander entlang der Umfangsrichtung (102) an der Rille (103) angebracht sind, derart, dass die Rille (103) von dem ersten Prallringelement (110), dem zweiten Prallringelement (120) und dem dritten Prallringelement bedeckt wird, und
ein drittes Kupplungsringelement, welches sich zwischen dem ersten Prallringelement (110) und dem dritten Prallringelement entlang der Umfangsrichtung (102) erstreckt, derart, dass die Rille (103) von dem dritten Kupplungsringelement zwischen dem ersten Prallringelement (110) und dem dritten Prallringelement bedeckt wird, und wobei das dritte Kupplungsringelement einen Gleitkontakt mit dem ersten Prallringelement (110) und/oder dem dritten Prallringelement bildet.

12. Turbine (100) nach einem der Ansprüche 1 bis 11, wobei die Stützstruktur (101) ein innerer Leitschaufelträger, ein äußerer Leitschaufelträger, ein inneres Deckband, ein äußeres Deckband, ein inneres Gehäuse und/oder ein äußeres Gehäuse ist.

13. Verfahren zur Herstellung einer Turbine (100), insbesondere einer Gasturbine, wobei das Verfahren umfasst:
Ausbilden einer Stützstruktur (101), welche sich entlang einer Umfangsrichtung (102) der Turbine (100) erstreckt, wobei die Stützstruktur (101) eine Rille (103) umfasst, durch welche Kühlluft geführt werden kann,
wobei sich die Rille (103) entlang der Umfangsrichtung (102) erstreckt,
Ausbilden eines ersten Prallringelements (110), das mehrere erste Kühllöcher umfasst,
Ausbilden eines zweiten Prallringelements (120), das mehrere zweite Kühllöcher umfasst,
Anbringen des ersten Prallringelements (110) und des zweiten Prallringelements (120) hintereinander entlang der Umfangsrichtung (102) an der Rille (103), derart, dass die Rille (103) von dem ersten Prallringelement (110) und dem zweiten Prallringelement (120) bedeckt wird,
**dadurch gekennzeichnet, dass** das Verfahren ferner umfasst:
Ausbilden eines ersten Kupplungsringelements (130), welches sich zwischen dem ersten Prallringelement (110) und dem zweiten Prallringelement (120) entlang der Umfangsrichtung (102) erstreckt, derart, dass die Rille (103) von dem ersten Kupplungsringelement (130) zwischen dem ersten Prallringelement (110) und dem zweiten Prallringelement (120) bedeckt wird,
wobei das erste Kupplungsringelement (130) eine zweite Öffnung (203) umfasst, derart, dass die Kühlluft durch die zweite Öffnung (203) und einige der zweiten Kühllöcher hindurch geleitet werden kann,
Ausbilden eines Gleitkontakts zwischen dem ersten Kupplungsringelement (130) und dem zweiten Prallringelement (120), derart, dass eine relative Bewegung zwischen dem ersten Kupplungsringelement (130) und dem zweiten Prallringelement (120) vorsehbar ist.

## Revendications

1. Turbine (100), en particulier turbine à gaz, la turbine (100) comprenant :
une structure de support (101) qui s'étend suivant une direction circonférentielle (102) de la turbine (100), étant entendu que la structure de support (101) comprend une gorge (103) par laquelle de l'air de refroidissement peut être guidé,
étant entendu que la gorge (103) s'étend suivant la direction circonférentielle (102) ;
un premier élément annulaire à impact (110) comprenant une pluralité de premiers trous de refroidissement ;
un deuxième élément annulaire à impact (120) comprenant une pluralité de deuxièmes trous de refroidissement ;
étant entendu que le premier élément annulaire à impact (110) et le deuxième élément annulaire à impact (120) sont montés sur la gorge (103) l'un derrière l'autre suivant la direction circonférentielle (102) de telle sorte que la gorge (103) soit couverte par le premier élément annulaire à impact (110) et le deuxième élément annulaire à impact (120), **caractérisée en ce que** la turbine comprend par tailleurs :
un premier élément annulaire de couplage (130) qui est agencé entre le premier élément annulaire à impact (110) et le deuxième élément annulaire à impact (120) de telle sorte que la gorge (103) soit couverte par le premier élément annulaire de couplage (130) entre le premier élément annulaire à impact (110) et le deuxième élément annulaire à impact (120), et étant entendu que le premier élément annulaire de couplage (130) forme un contact coulissant avec le deuxième élément annulaire à impact (120) de telle sorte qu'un mouvement relatif soit réalisable entre le premier élément annulaire de couplage (130) et le deuxième élément annulaire à impact (120),
étant entendu que le premier élément annulaire de couplage (130) comprend une deuxième ouverture (203) de telle sorte que l'air de refroidissement puisse s'écouler par la seconde ouverture (203) et certains des deuxièmes trous de refroidissement.

2. Turbine (100) selon la revendication 1,
étant entendu que le premier élément annulaire de couplage (130) est fixé au premier élément annulaire à impact (110) par l'un quelconque des procédés du groupe comprenant le formage d'un seul tenant, le soudage, la fusion, le rivetage et la liaison.

3. Turbine (100) selon la revendication 1 ou 2,
étant entendu que le deuxième élément annulaire à impact (120) comprend une rainure de guidage (201) s'étendant suivant la direction circonférentielle (102),
étant entendu que la rainure de guidage (201) est formée en vue de recevoir le premier élément annulaire de couplage (130) de telle sorte que le premier élément annulaire de couplage (130) puisse coulisser dans la rainure de guidage (201).

4. Turbine (100) selon l'une des revendications 1 à 3, étant entendu que le premier élément annulaire de couplage (130) comprend une première ouverture (202) de telle sorte que l'air de refroidissement puisse s'écouler par la première ouverture (202) et certains des premiers trous de refroidissement.

5. Turbine (100) selon l'une des revendications 1 à 3,
étant entendu que, dans une première position relative du premier élément annulaire à impact (110) et du deuxième élément annulaire à impact (120),
le premier élément annulaire de couplage (130) comprend un ensemble de premières ouvertures (202) de telle sorte que l'air de refroidissement puisse s'écouler par certaines des premières ouvertures (202) et certains des premiers trous de refroidissement, et
étant entendu que le premier élément annulaire de couplage (130) comprend une deuxième ouverture (203) de telle sorte que l'air de refroidissement puisse s'écouler par la deuxième ouverture (203) et certains des deuxièmes trous de refroidissement.

6. Turbine (100) selon l'une des revendications 1 à 3 et selon la revendication 5,
étant entendu que, dans une deuxième position relative du premier élément annulaire à impact (110) et du deuxième élément annulaire à impact (120),
le premier élément annulaire de couplage (130) comprend un ensemble de premières ouvertures (202)
de telle sorte que de l'air de refroidissement puisse s'écouler par certaines des premières ouvertures (202) et certains des premiers trous de refroidissement, et
de telle sorte que de l'air de refroidissement puisse s'écouler par certaines des autres premières ouvertures (202) seulement, et
étant entendu que le premier élément annulaire de couplage (130) comprend une deuxième ouverture (203) de telle sorte que de l'air de refroidissement puisse s'écouler par la deuxième ouverture (203) et certains des deuxièmes trous de refroidissement.

7. Turbine (100) selon l'une des revendications 1 à 6, étant entendu que le premier élément annulaire à impact (110) est déformable élastiquement, et
étant entendu que le premier élément annulaire à impact (110) et la gorge (103) sont formés l'une par rapport à l'autre de telle sorte que le premier élément annulaire à impact (110) soit inséré dans la gorge (103) d'une manière précontrainte telle que le premier élément annulaire à impact (110) forme avec la structure de support (101) un assemblage par emmanchement à force.

8. Turbine (100) selon l'une des revendications 1 à 7, étant entendu que le premier élément annulaire à impact (110) comprend une patte de retenue (312) qui saille suivant une direction axiale (302) de la turbine (100), et
étant entendu que la structure de support comprend une cavité (303) pour patte de retenue de telle sorte que la patte de retenue (312) soit agencée à l'intérieur de la cavité (303) pour patte de retenue d'une manière coulissante au moins suivant la direction circonférentielle (102).

9. Turbine (100) selon l'une des revendications 1 à 8, étant entendu que le premier élément annulaire à impact (110) comprend une première face d'extrémité circonférentielle (111) et une autre première face d'extrémité circonférentielle qui est, dans la direction circonférentielle (102), à l'opposé de la première face d'extrémité circonférentielle (111),
étant entendu que le deuxième élément annulaire à impact (120) comprend une deuxième face d'extrémité circonférentielle (121) et une autre deuxième face d'extrémité circonférentielle (121), qui est, dans la direction circonférentielle (102), à l'opposé de la deuxième face d'extrémité circonférentielle (121), et
étant entendu que la première face d'extrémité circonférentielle (111) et la deuxième face d'extrémité circonférentielle (121) sont agencées adjacentes l'une à l'autre suivant la direction circonférentielle (102) de telle sorte que le premier élément annulaire de couplage (130) s'étende entre la première face d'extrémité circonférentielle (111) et la deuxième face d'extrémité circonférentielle (121) suivant la direction circonférentielle (102).

10. Turbine (100) selon la revendication 9, comprenant par tailleurs :
un deuxième élément annulaire de couplage,
étant entendu que l'autre première face d'extrémité circonférentielle et l'autre deuxième face d'extrémité circonférentielle sont agencées adjacentes l'une à l'autre suivant la direction circonférentielle (102) de telle sorte que le deuxième élément annulaire de couplage s'étende entre l'autre première face d'extrémité circonférentielle et l'autre deuxième face d'extrémité circonférentielle suivant la direction circonférentielle (102), et
étant entendu que le deuxième élément annulaire de couplage forme un contact coulissant avec le deuxième élément annulaire à impact (120).

11. Turbine (100) selon l'une des revendications 1 à 10, comprenant par tailleurs :
un troisième élément annulaire à impact comprenant une pluralité de troisièmes trous de refroidissement,
étant entendu que le premier élément annulaire à impact (110), le deuxième élément annulaire à impact (120) et le troisième élément annulaire à impact sont montés sur la gorge (103) l'un derrière l'autre suivant la direction circonférentielle (102) de telle sorte que la gorge (103) soit couverte par le premier élément annulaire à impact (110), le deuxième élément annulaire à impact (120) et le troisième élément annulaire à impact, et
un troisième élément annulaire de couplage qui s'étend entre le premier élément annulaire à impact (110) et le troisième élément annulaire à impact suivant la direction circonférentielle (102) de telle sorte que la gorge (103) soit couverte par le troisième élément annulaire de couplage entre le premier élément annulaire à impact (110) et le troisième élément annulaire à impact, et
étant entendu que le troisième élément annulaire de couplage forme un contact coulissant avec le premier élément annulaire à impact (110) et/ou le troisième élément annulaire à impact.

12. Turbine (100) selon l'une des revendications 1 à 11, étant entendu que la structure de support (101) est un support interne d'aubes fixes, un support externe d'aubes fixes, un anneau interne, un anneau externe, un logement interne et/ou un logement externe.

13. Procédé de fabrication d'une turbine (100), en particulier d'une turbine à gaz (100), le procédé consistant :
à former une structure de support (101) qui s'étend suivant une direction circonférentielle (102) de la turbine (100), étant entendu que la structure de support (101) comprend une gorge (103) par laquelle de l'air de refroidissement peut être guidé,
étant entendu que la gorge (103) s'étend suivant la direction circonférentielle (102) ;
à former un premier élément annulaire à impact (110) comprenant une pluralité de premiers trous de refroidissement ;
à former un deuxième élément annulaire à impact (120) comprenant une pluralité de deuxièmes trous de refroidissement ;
à monter le premier élément annulaire à impact (110) et le deuxième élément annulaire à impact (120) sur la gorge (103) l'un derrière l'autre suivant la direction circonférentielle (102) de telle sorte que la gorge (103) soit couverte par le premier élément annulaire à impact (110) et le deuxième élément annulaire à impact (120),
**caractérisé en ce que** le procédé consiste par ailleurs :
à former un premier élément annulaire de couplage (130) qui s'étend entre le premier élément annulaire à impact (110) et le deuxième élément annulaire à impact (120) suivant la direction circonférentielle (102) de telle sorte que la gorge (103) soit couverte par le premier élément annulaire de couplage (130) entre le premier élément annulaire à impact (110) et le deuxième élément annulaire à impact (120),
étant entendu que le premier élément annulaire de couplage (130) comprend une deuxième ouverture (203) de telle sorte que l'air de refroidissement puisse s'écouler par la deuxième ouverture (203) et certains des deuxièmes trous de refroidissement,
à former un contact coulissant entre le premier élément annulaire de couplage (130) et le deuxième élément annulaire à impact (120) de telle sorte qu'un mouvement relatif soit réalisable entre le premier élément annulaire de couplage (130) et le deuxième élément annulaire à impact (120).
